# EUROPÄISCHE PATENTANMELDUNG

(11) **EP 3 466 511 A1**
(43) Veröffentlichungstag der Anmeldung: **10.04.2019**
(21) Anmeldenummer: 17195457.1
(22) Anmeldetag: 09.10.2017
(51) Int. Cl.: B01D 15/24, B01D 15/40, G01N 30/82

(54) **PRÄPARATIVES SFC-SYSTEM MIT EINEM SORTIERMODUL**

(71) Anmelder: SEPIAtec GmbH, 12487 Berlin (DE)
(72) Erfinder: Jüterbock, Wolf-Rainer, 12163 Berlin (DE)
(74) Vertreter: Gulde & Partner

(57) **Zusammenfassung**

Die Erfindung betrifft ein präparatives SFC-System umfassend:
- ein Sammlermodul zum Auffangen von Fraktionen, die bei einer Trennung eines Stoffgemisches anfallen, wobei das Sammlermodul einen Fraktioniergefäßhalter für eine Vielzahl von Fraktioniergefäßen umfasst, die elektrisch oder pneumatisch nacheinander unter eine Austrittsöffnung eines Gas-Flüssigkeits-Abscheiders positionierbar sind; und
- ein Sortiermodul, das sich dem Sammlermodul auf einer Seite anschließt und ein Greifsystem mit einem Greifer beinhaltet, der ausgelegt ist Fraktioniergefäße aus dem Fraktioniergefäßhalter des Sammlermoduls zu entnehmen oder Fraktioniergefäße in den Fraktioniergefäßhalter des Sammlermoduls einzusetzen.

## Beschreibung

Die Erfindung betrifft ein präparatives SFC-System mit einem Sortiermodul.

### Technologischer Hintergrund

Die überkritische oder auch superkritische Flüssigkeitschromatographie (Abk. SFC, engl. supercritical fluid chromatography) wird in der Regel als analytisches Nachweisverfahren betrieben. Bei der SFC werden mobile Phasen verwendet, die sich jenseits der stoffspezifischen kritischen Temperatur und des kritischen Druckes befinden. Als mobile Phase können Gase, wie CO₂, N₂O, C₂F₆ etc., im überkritischen Zustand verwendet werden. In der Praxis dominiert der Einsatz von CO₂, das allerdings sehr unpolar ist und nur ein geringes Lösungsvermögen besitzt. Für die Trennung und Elution von Analyten ist es damit meistens notwendig, die mobile Phase durch eine polare Komponente zu erweitern und so die Elutionskraft zu erhöhen. Als sogenannte Modifier kommen hierfür am häufigsten Methanol, Ethanol und Isopropanol zum Einsatz. Sollten Trennung oder Peak-Form durch Modifierzusatz noch nicht ausreichend gut sein, besteht die Möglichkeit Additive zuzusetzen. Dies sind Salze, Säuren oder Basen, die die Interaktionen von Analyt und stationärer bzw. mobiler Phase beeinflussen können.

Im Allgemeinen verwendet man als stationäre Phasen die bekannten Materialien aus der Gaschromatographie und HPLC, zum Beispiel Kieselgele oder Polysiloxane oder speziell für die SFC entwickelte Materialien. Dabei kann die stationäre Phase ein Feststoff oder eine Flüssigkeit in Form eines dünnen Films auf einem Trägermaterial sein.

Die Druckregelung und Förderung der mobilen Phase erfolgt in der Regel über Kolbenpumpen. Das Einspritzsystem für die Proben ist wie bei der HPLC zumeist ein Mehrwegeventil mit Probenschleife. Die Temperatur kann über einen Säulenofen geregelt werden. Ein Rückdruckregler befindet sich am Ende der Säule und soll den erforderlichen Mindestdruck für den überkritischen Zustand bis zum Säulenende gewährleisten. Der eingesetzte Detektor ist abhängig von der mobile Phase und dem Analyten. Bei gemischten Phasen aus CO₂ und Modifier werden beispielsweise häufig UV/VIS-Detektoren eingesetzt.

Mit der SFC lassen sich beispielsweise analytische Probleme behandeln, für die Gas- oder Flüssigchromatographie nicht mehr anwendbar sind. Vorteile der SFC liegen ferner in der geringeren Analysentemperatur, wodurch das Auftreten thermischer Artefakte minimiert wird. Außerdem ist die Geschwindigkeit der Trennung gegenüber einer klassischen HPLC meist schneller und die SFC lässt sich, verglichen mit der Gaschromatographie, auch bei geringer Flüchtigkeit der Probenkomponenten anwenden.

Von zunehmendem Interesse sind präparative SFC-Anlagen, die eine gezielte Auftrennung und Konzentration einzelner Komponenten im präparativen Maßstab ermöglichen. Dazu ist eine Fraktionierung der mobilen Phase nach dem Detektor notwendig. Vorher müssen Gas und Flüssigkeit der mobilen Phase getrennt werden. Letzteres wird durch im Produktstrom installierte Gas-Flüssigkeits-Abscheider erreicht, die eine Abtrennung des Gases aus der mobilen Phase erlauben. Die zu sammelnden Komponenten befinden sich dann in der abgetrennten Flüssigkeit.

In den von der Anmelderin kommerziell vertriebenen präparativen SFC-Systemen basiert die Fraktionierung auf der Umlenkung des Produktstromes zu Gas-Flüssigkeits-Abscheidern, von deren Auslässen jeweils eine Kapillare zu einem Fraktionsgefäß führt. Die Fraktionierung wird durch das Umschalten eines Mehrwegeventils erreicht. Die Anzahl der Fraktionen ist auf die Anzahl der verbauten Gas-Flüssigkeits-Abscheider begrenzt (zum Beispiel 8 für Sammelfraktionen, 1 für Abfall). Diese technische Konfiguration ist insbesondere optimiert für die Trennung von chiralen Substanzen, bei der nur wenige Fraktionen gesammelt werden. Bei Trennungen von achiralen Substanzen können sich weitaus mehr Fraktionen ergeben, was die Bereitstellung einer größeren Anzahl von Fraktionsgefäßen erforderlich macht.

US 2014/021703 A1 beschreibt ein präparatives SFC-System, bei dem ein einziger, stationär angebrachter Gas-Flüssigkeits-Abscheider kontinuierlich arbeitet. Die Sammlung der Fraktionen erfolgt über eine längere Kapillare, die vom Auslass des Gas-Flüssigkeits-Abscheiders zu einem in XY-Richtung fahrbaren Roboterarm führt, der die Positionen einer größeren Anzahl von Fraktionsgefäßen ansteuern kann (so genannte "Open Bed"-Anordnung). Der Flüssigausgang bewegt sich demnach über die Fraktioniergefäße. Ein Mehrwegeventil befindet sich stromaufwärts des Fraktionssammlers. Der Gas-Flüssigkeits-Abscheider ist über eine lange Kapillare mit dem Roboterarm verbunden. Nachteilig ist, dass eine lange Kapillare mit einem hohen Transfervolumen einhergeht, so dass eine Rückvermischung der getrennten Probe durch Diffusion in der Kapillare erfolgen kann. Weiterhin ändert sich im Gradientenbetrieb der Fluss in dieser Kapillare.

Die Firma Jasco, Japan, bietet ein (semi-)präparatives SFC-System (Handelsname LC-4000 Series) für achirale Trennungen an. Dabei wird nach der Trennsäule eine flexible Kapillare zu einer Nadel geführt, die an einem XY-Roboterarm angebracht ist. Diese Nadel taucht jeweils von oben in einen miniaturisierten Gas-Flüssigkeits-Abscheider ein, der direkt auf einem Fraktionsgefäß angebracht ist (US 2010/0077874 A1). Der Hersteller gibt an, dass auf diese Weise bis zu 56 Fraktionsgefäße befüllt werden können.

US 2001/013494 A1 beschreibt ein weiteres präparatives SFC-System, bei dem waschbare und automatisiert wechselbare Gas-Flüssigkeits-Separatoren, deren Spitzen in Fraktioniergefäße tauchen, durch ein stromaufwärts vorhandenes Mehrwegeventil angesteuert werden.

US 7,909,993 B2 beschreibt ein präparatives SFC-System, bei dem die Trennung von Gas und Flüssigkeit und auch die Sammlung des Fraktionsvolumens zeitgleich in einem sich bewegenden Rotor erfolgen.

Nach dem Stand der Technik erfolgt somit zum Einen die Fraktionierung durch Umschalten eines Mehrwegeventils, derart, dass der Produktstrom zu einer begrenzten Anzahl von fixierten Gas-Flüssigkeits-Abscheidern umgeleitet wird, die CO₂ abscheiden und Lösungsmittel mit gelösten Substanzen in fest verbundene Fraktioniergefäße leiten. Zum Anderen kann auch ein einzelner, fixierter Gas-Flüssigkeits-Abscheider über eine lange Kapillare mit einem XY-Fraktionssammler verbunden werden. Dies führt jedoch zu Rückvermischung der Fraktionen in der langen Kapillare. Außerdem muss bei Gradientenbetrieb (ansteigender Anteil an organischem Lösungsmittel im CO₂-Strom über die Zeit) ausgleichend Lösungsmittel über eine Dosierpumpe zugemischt werden, um den Volumenstrom am Flüssig-Ausgang des Gas-Flüssigkeits-Abscheiders konstant zu halten. Andernfalls müsste die Verweilzeit des Lösungsmittels zwischen Gas-Flüssigkeits-Abscheider und Austritt am Fraktionssammler aufwendig berechnet werden. Dadurch kann es zu einem höheren Verbrauch an Lösungsmittel im Gradienten-Betrieb kommen.

Es besteht anhaltender Bedarf für ein präparatives SFC-System, das zum Beispiel das automatisierte Sammeln einer größeren Anzahl an Fraktionen ermöglicht und dem Anwender die Weiterverarbeitung der gesammelten Fraktionen erleichtert.

### Zusammenfassung der Erfindung

Ein oder mehrere Nachteile herkömmlicher SFC-Systeme werden mit Hilfe des erfindungsgemäßen präparativen SFC-Systems gelöst oder zumindest gemindert. Das erfindungsgemäße SFC-System umfasst dazu:
- ein Sammlermodul zum Auffangen von Fraktionen, die bei einer Fraktionierung eines Stoffgemisches anfallen, wobei das Sammlermodul einen Fraktioniergefäßhalter für eine Vielzahl von Fraktioniergefäßen umfasst, die elektrisch oder pneumatisch nacheinander unter eine Austrittsöffnung eines Gas-Flüssigkeits-Abscheiders positionierbar sind; und
- ein Sortiermodul, das sich dem Sammlermodul auf einer Seite anschließt und ein Greifsystem mit einem Greifer beinhaltet, der ausgelegt ist Fraktioniergefäße aus dem Fraktioniergefäßhalter des Sammlermoduls zu entnehmen oder Fraktioniergefäße in den Fraktioniergefäßhalter des Sammlermoduls einzusetzen.

Das erfindungsgemäße SFC-System beinhaltet also mindestens zwei aufeinander abgestimmte Module, nämlich ein Sammlermodul und ein Sortiermodul. Das Sammlermodul dient dazu die nach der Trennung anfallenden Fraktionen mittels eines Gas-Flüssigkeits-Abscheiders in eine gasförmige und eine flüssige Phase zu trennen und die flüssige Phase in geordneter Weise in Fraktioniergefäße zu leiten. Die Fraktioniergefäße werden in einem Fraktioniergefäßhalter bereitgestellt. Das Sammlermodul bewegt nun leere Fraktioniergefäße automatisiert an eine Ausflussstelle des Gas-Flüssigkeits-Abscheiders. Seitlich neben dem Sammlermodul wird das Sortiermodul platziert und Letzteres weist einen Greifer als Teil eines Greifsystems auf, der sich in einen Bereich des Sammlermoduls bewegen lässt, in dem er ungehindert ein befülltes Fraktioniergefäß entnehmen kann oder leere Fraktioniergefäße in entsprechende Aufnahmen des Fraktioniergefäßhalters einstellen kann. Die entnommenen Fraktioniergefäße können in geeignete Fraktioniergefäßhalter gesetzt werden, die im Sortiermodul bereitgestellt werden.

Zu einem Greifsystem, wie es im Sortiermodul Anwendung findet, zählen die zur Bewegung des Greifers notwendigen Aktoren/Effektoren, aber auch erforderliche Hilfseinrichtungen, wie Schutzeinrichtungen und Sensoreinheiten. Der Greifer ermöglicht ein Erfassen und Halten der Fraktioniergefäße. Geeignete mechanische Greifer umfassen beispielsweise Zweifinger- oder Mehrfingergreifer in starr-gelenkiger oder elastischer Ausführung. Der Antrieb des mechanischen Greifers erfolgt in der Regel pneumatisch oder elektrisch.

Das Greifsystem des Sortiermoduls wurde demnach so modifiziert, dass der Greifer über den Fraktioniergefäßhalter des Sammlermoduls ausfahren kann. Dazu kann das Greifsystem des Sortiermoduls beispielsweise einen an einem Seilzug aufgehängten Greifer umfassen, der mittels einer Laufkatze entlang eines Trägers verfahrbar ist. Eine alternative Ausführungsform des Greifsystems beinhaltet einen Gelenkarm, an dessen Ende der Greifer angebracht ist.

Das Sortiermodul kann mit einem oder mehreren Fraktioniergefäßhaltern zur Aufnahme von Fraktioniergefäßen ausgestattet werden. Da das Sammeln von Fraktionen im SFC-System drucklos erfolgt, können die im Sortiermodul befindlichen Fraktioniergefäßhalter auch im laufenden Betrieb unabhängig voneinander durch einen Bediener ausgetauscht oder entnommen werden. Das Sortiermodul kann mit rechteckigen oder mit einem drehbaren Fraktioniergefäßhalter ähnlich dem Sammlermodul ausgestattet werden.

Mit dem Sortiermodul können demnach Fraktioniergefäße im laufenden Betrieb aus dem Sammlermodul entnommen oder eingestellt werden. Die Proben können gegebenenfalls durch denselben oder einen weiteren Greifer innerhalb des Sortiermoduls transportiert werden. Dies ermöglicht das Sortieren der Proben oder eine Weiterbehandlung der Proben. Die Sortierfunktion ist besonders nützlich, wenn es um die Weiterverarbeitung der Proben geht. So ist es zum Beispiel möglich, Fraktionen, die in einem zweiten Geräte analysiert werden sollen (Massenspektrometer, Gaschromatographie, Flüssigchromatographie, etc.), in einen gesonderten Fraktioniergefäßhalter zu transportieren, der dann zum nächsten Gerät gebracht werden kann. Sollen mit verschiedenen Fraktionen unterschiedliche Analysen stattfinden, können die entsprechenden Fraktioniergefäße je nach folgendem Analysegerät automatisch in unterschiedliche Fraktioniergefäßhalter gestellt werden. Das Sortiermodul kann also auch auf Grundlage eines einfachen Probentransporters aufgebaut werden, der in der Lage ist die Positionen der Fraktioniergefäße zu wechseln. Das Greifsystem des Sortiermoduls ist somit vorzugsweise ausgelegt, die Positionen der Fraktioniergefäße innerhalb des Sortiermoduls zu wechseln.

Mit Hilfe des Sortiermoduls ist es theoretisch möglich eine unbegrenzte Anzahl an Fraktionen zu sammeln. Das Sortiermodul wird beispielsweise zu Beginn eines Laufs mit einer geeigneten Zahl leerer Fraktioniergefäße bestückt, die das Sortiermodul gegen die gefüllten Fraktioniergefäße aus dem Sammlermodul austauschen kann. Die Fraktioniergefäßhalter mit gefüllten Fraktioniergefäßen wiederum können von einem Anwender gegen Fraktioniergefäßhalter mit ungefüllten Fraktioniergefäßen ausgetauscht werden. Es ist möglich, dem Anwender über eine Software eine Information auszugeben, wann die Fraktioniergefäßhalter zu tauschen sind und wie die nachgestellten Fraktioniergefäßhalter mit Fraktioniergefäßen zu bestücken sind.

Für erweiterte Anwendungen kann das Sortiermodul dazu ausgelegt sein, Flüssigkeiten aus einem oder mehreren Lösungsmittelbehältern in die Fraktioniergefäße oder Flüssigkeiten zwischen den Fraktioniergefäßen zu pipettieren. Dies ermöglicht Anwendungen, wie das Zugeben von stabilisierenden Chemikalien zu Proben, das Mischen von Proben, Zugeben von Reagenzien zu Proben (zum Beispiel einer Deriviatisierungslösung für weitere Analysen), Pooling (Vereinen von gleichen Fraktionen aus mehreren Injektionen), und die Zugabe von Pufferlösung. In einer bevorzugten Ausführungsform des SFC-Systems ist somit das Sortiermodul ausgelegt, Flüssigkeiten aus einem oder mehreren Reservoirs in die Fraktioniergefäße oder Flüssigkeiten zwischen den Fraktioniergefäßen zu pipettieren.

Die Fraktioniergefäßhalter können kompatibel zu Geräten zur Weiterverarbeitung der Proben bereitgestellt werden oder es werden direkt Fraktioniergefäßhalter der weiterverarbeitenden Geräte eingesetzt. Dies ermöglicht zum Beispiel folgenden Anwendungsfall: Das Sortiermodul wird mit einem Wägesystem ausgestattet, das es ermöglicht, gefüllte Fraktioniergefäße zu wiegen und zweite Fraktioniergefäße so mit Alkohol zu befüllen, dass diese das exakt gleiche Gewicht aufweisen. Dies wäre zum Beispiel sinnvoll zum Bestücken von Vakuumzentrifugen, bei denen zu jedem Gefäß einzeln und von Hand ein passendes Gegengewicht hergestellt werden muss. Die Proben können dann zusammen mit dem Fraktioniergefäßhalter in die Vakuumzentrifuge eingestellt und getrocknet werden.

Vorzugsweise weisen Sammlermodul und Sortiermodul jeweils einen runden Fraktioniergefäßhalter auf, in dessen Umfang Aufnahmen für Fraktioniergefäße vorgesehen sind. Durch eine einfache Drehbewegung der Fraktioniergefäßhalter lassen sich die Fraktioniergefäße in eine vorbestimmte Position bewegen. Die Bewegung des Greifers ist dementsprechend einfach realisierbar, weil Bewegungen in eine der Raumrichtungen entfallen können. Die Konfiguration ist daher mit geringem konstruktiven Aufwand und Bauraum sowie einer weniger komplexen Steuerung realisierbar. Das Greifsystem kann hiervon unabhängig einen oder mehrere weitere Greifer umfassen, wenn weitere Funktionalitäten, wie eine nachgeordnete Sortierung ermöglicht werden sollen.

Die Ansteuerung des Greifsystems des Sortiermoduls kann über eine zentrale Steuereinheit des SFC-Systems erfolgen. Mit einer solchen Steuereinheit können die vorab beschriebenen Funktionen implementiert werden. So könnte beispielsweise die Entnahme von Fraktioniergefäßen aus dem Sammlermodul auf Basis eines Detektorsignals des Trennmoduls erfolgen.

Das Sammlermodul umfasst vorzugsweise die folgenden Komponenten:
einen Gas-Flüssigkeits-Abscheider, der stromabwärts eines Rückdruckreglers im Flussweg angeordnet ist;
ein Mehrwegeventil, das direkt stromabwärts an einem Auslass des Gas-Flüssigkeits-Abscheiders montiert ist und dazu ausgelegt ist, den eintretenden Flüssigkeitsstrom entweder über eine Kapillare in ein Fraktioniergefäß, das unter dem Gas-Flüssigkeits-Abscheider positioniert ist, oder in ein Abfallgefäß zu leiten; wobei
   (i) der Gas-Flüssigkeits-Abscheider, das Mehrwegeventil und die Kapillare ausgelegt sind eine gemeinsame vertikale Bewegung auszuführen, derart, dass eine Spitze der Kapillare in eine Öffnung des Fraktioniergefäßes eintaucht und wieder herausfährt; oder
   (ii) der Gas-Flüssigkeits-Abscheider fest montiert ist und das Mehrwegeventil und die Kapillare ausgelegt sind eine gemeinsame vertikale Bewegung auszuführen, derart, dass eine Spitze der Kapillare in eine Öffnung des Fraktioniergefäßes eintaucht und wieder herausfährt; oder
   (iii) der Gas-Flüssigkeits-Abscheider und das Mehrwegeventil fest montiert sind und die Kapillare ausgelegt ist eine vertikale Bewegung auszuführen, derart, dass eine Spitze der Kapillare in eine Öffnung des Fraktioniergefäßes eintaucht und wieder herausfährt; und
einen Fraktioniergefäßhalter für eine Vielzahl von Fraktioniergefäßen, die elektrisch oder pneumatisch nacheinander unter der Spitze der Kapillare positionierbar sind.

Die Komponenten Gas-Flüssigkeits-Abscheider, Mehrwegeventil und Kapillare können demnach in drei Alternativen beweglich am Sammlermodul montiert sein. Nach einer ersten Alternative (i) werden alle drei Komponenten gemeinsam vertikal beweglich montiert. Alternative (ii) sieht vor, dass sich nur noch das Mehrwegeventil und die Kapillare bewegen lassen, während der Gas-Flüssigkeits-Abscheider am Sammlermodul fixiert ist. Ferner ist gemäß Alternative (iii) nur die Kapillare beweglich. Alle Ausführungsformen erlauben ein "Eintauchen" der Austrittskapillare in das Fraktioniergefäß.

Das Mehrwegeventil ist - gegenüber der üblichen Position stromaufwärts des Gas-Flüssigkeits-Abscheiders - direkt am Auslass des Gas-Flüssigkeits-Abscheiders angeordnet und wird dazu verwendet, den Strom des organischen Lösungsmittels entweder in das Fraktioniergefäß, das aktuell unter dem Gas-Flüssigkeits-Abscheider positioniert ist, oder einen Abfallbehälter zu leiten. Dadurch kann das Transfervolumen vom Gas-Flüssigkeits-Abscheider zu den Fraktioniergefäßen sehr klein gehalten werden.

Durch das Eintauchen der Kapillarspitze in die Fraktioniergefäße wird eine Kontamination anderer Fraktionen durch Aerosolbildung verhindert. Durch das sehr kleine Transfervolumen am Auslass des Gas-Flüssigkeits-Abscheiders ist ferner eine Zufügung von organischem Lösungsmittel über eine Dosierpumpe nur bei Trennungen mit niedrigem Modifier-Gehalt nötig (in der Regel <5%). Das senkt den Lösungsmittelverbrauch und verhindert ein unnötiges Verdünnen der Fraktionen.

Zur Durchführung der vertikalen Bewegung gemäß der oben genannten Alternativen (i) bis (iii) kann ein entsprechend ausgelegter Roboterarm dienen. Alternativ kann diese vertikale Bewegung auch durch eine Drehbewegung eines Fraktioniergefäßhalters erzwungen werden, zum Beispiel durch ein entsprechendes Wellenprofil am Rand des Fraktioniergefäßhalters, das eine mechanische Bewegung der Komponenten entsprechend der Alternativen (i) bis (iii) bewirkt.

Die Fraktioniergefäße stehen in einem Fraktioniergefäßhalter, der automatisch ein Fraktioniergefäß unter der Kapillarspitze positionieren kann. Die Anzahl und Größe der Fraktioniergefäße können variiert werden. Der Fraktioniergefäßhalter ist also vorzugsweise rund und weist im Umfang des Fraktioniergefäßhalters angeordnete Aufnahmen für die Fraktioniergefäße auf.

Ein Sammlermodul im Sinne der Erfindung ist demnach ein automatisch oder halbautomatisch arbeitendes Modul zum Auffangen von Fraktionen, die bei der SFC-Trennung eines Stoffgemisches anfallen. Eine Steuerung bewirkt beispielsweise den Wechsel der Fraktioniergefäße a) in einer bestimmten zeitlichen Frequenz, b) bis zum Auffangen eines eingestellten Fraktionsvolumens, oder c) in Folge der Detektion eines (bestimmten) Signals durch einen dem Fraktionssammler vorgeschalteten Detektor.

Die Fraktionierung findet im Sammlermodul nicht, wie zum Beispiel bei einigen herkömmlichen SFC-Systemen für chirale Anwendungen, durch Umschalten des Mehrwegeventils statt, sondern durch schrittweise Drehung des gegebenenfalls runden Fraktioniergefäßhalters. Dadurch ist die Anzahl der möglichen Fraktionen größer, verglichen mit der Anordnung bei der jeweils ein Gas-Flüssigkeits-Separator mit einem Fraktioniergefäß verbunden ist. Die Anzahl der Fraktionen und das maximale Volumen sind abhängig von der Gestaltung des Halters. Dieser kann in unterschiedlichen Ausführungen hergestellt werden, etwa zur Aufnahme kleiner Röhrchen oder für kleine Flaschen.

Das Sammlermodul ist so konstruiert, dass es möglich ist, ein Sortiermodul anzuschließen. Dafür wird beispielsweise eine Grundplatte, auf der der Fraktioniergefäßhalter angebracht ist, so ausgestaltet, dass sie auf einer Seite über ein Profil des Sammlermoduls hinausragt. Dadurch ist es möglich, dass ein Greifer des Sortiermoduls über das äußerste Fraktioniergefäß fahren und dieses aufnehmen kann.

Weitere bevorzugte Ausgestaltungen lassen sich der nachfolgenden Beschreibung entnehmen.

### Kurzbeschreibung der Figuren

Die Erfindung wird nachfolgend anhand eines Ausführungsbeispiels und dazugehöriger Zeichnungen näher erläutert. Die Figuren zeigen:
- Fig. 1: Ein Fließschema eines erfindungsgemäßen präparativen SFC-Systems mit Sammlermodul und Sortiermodul;
- Fig. 2: Eine schematische Darstellung der vertikalen Bewegung von Gas-Flüssigkeits-Abscheider, Mehrwegeventil und Kapillare gemäß der Alternative (i) des Sammlermoduls;
- Fig. 3: Eine schematische Darstellung der vertikalen Bewegung von Mehrwegeventil und Kapillare gemäß der Alternative (ii) des Sammlermoduls;
- Fig. 4: Eine schematische Darstellung der vertikalen Bewegung der Kapillare gemäß der Alternative (iii) des Sammlermoduls;
- Fig. 5: Eine Vergrößerung der in Figur 4 dargestellten Mechanik zur vertikalen Bewegung der Kapillare gemäß der Alternative (iii) des Sammlermoduls;
- Fig. 6: Eine vergrößerte Darstellung des Sortiermoduls aus Fig. 1;
- Fig. 7: Eine schematische Darstellung des Sortiermoduls mit zusätzlichem Roboterarm mit Pipettiervorrichtung;
- Fig. 8: Eine schematische Darstellung des Sortiermoduls mit rundem Fraktioniergefäßhalter; und
- Fig. 9: Eine schematische Darstellung des Sortiermoduls mit Gelenkarm und Wägesystem.

### Detaillierte Beschreibung der Erfindung

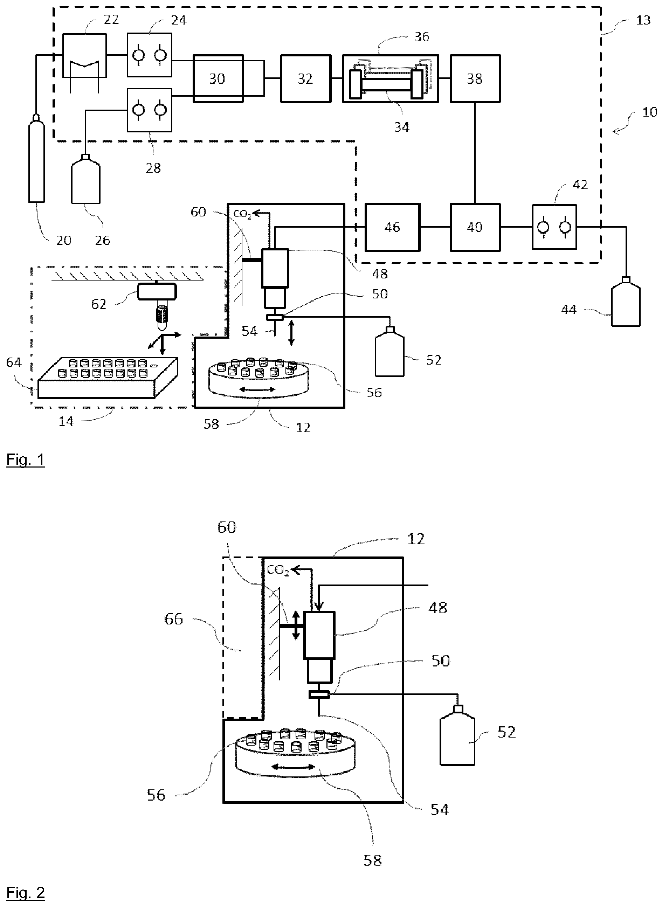

Figur 1 zeigt ein Fließschema eines präparativen SFC-Systems 10 nach einer Ausführungsform der Erfindung. Das SFC-System 10 umfasst hier ein Sammlermodul 12, ein Trennmodul 13 und ein Sortiermodul 14.

Als mobile Phase in der präparativen SFC werden üblicherweise Mischungen aus CO₂ bei überkritischen Bedingungen und einem organischen Lösungsmittel (Modifier) verwendet. Das CO₂ wird aus einer Druckflasche 20 flüssig entnommen und in einem Wärmetauscher 22 abgekühlt. Das kalte CO₂ wird mit einer Pumpe 24 gefördert. Organisches Lösungsmittel wird aus einem Lösungsmittelbehälter 26 entnommen und mit einer Pumpe 28 gefördert. Organisches Lösungsmittel und CO₂ werden in der Vorheizung 30 erhitzt und anschließend gemischt und bilden so die mobile Phase. Der gemischte Strom durchläuft einen Autosampler 32, in dem automatisch eine definierte Menge Probe zugegeben wird. Die Probe wird mit der mobilen Phase transportiert und durch eine Säule 34 in ihre Bestandteile aufgetrennt. Ein Säulenofen 36 kann für die Aufnahme einer unterschiedlichen Anzahl von Säulen konfiguriert werden.

Die Bestandteile der Probe werden in einem Detektor 38 erfasst. Das System kann mit unterschiedlichen Detektoren ausgestattet sein, zum Beispiel einem UV/VIS-DAD-Detektor, einem sogenannten Evaporative Light Scattering Detector (ELSD), einem Flammenionisationsdetektor, einem Massenspektrometer oder einem Fluoreszenzdetektor.

Die mobile Phase passiert anschließend einen Rückdruckregler 40, der den Druck stromabwärts der Säule 34 konstant hält. Der Druck kann vom Benutzer gewählt werden und wird automatisch geregelt. Gegebenenfalls wird im Rückdruckregler 40 mit Hilfe einer weiteren Pumpe 42 aus einem Lösungsmittelbehälter 44 zusätzlich organisches Lösungsmittel zugegeben. Pumpe 42 ermöglicht Trennungen mit reinem CO₂ ohne Zugabe von Modifier. Das zugegebene Lösungsmittel dient dabei zum Bilden einer flüssigen Phase, die die Probensubstanzen aufnimmt und die am Flüssigausgang aufgefangen werden kann.

Eine Nachheizung 46 erhitzt die mobile Phase nach Austritt aus dem Rückdruckregler 40, um der Abkühlung durch die Dekompression im Rückdruckregler 40 entgegenzuwirken und einen zuverlässigen Betrieb der nachgeschalteten Komponenten zu gewährleisten. Das Trennmodul 13 umfasst vorliegend die Pumpen 24, 28, die Vorheizung 30, den Autosampler 32, den Säulenofen 36, den Detektor 38, den Rückdruckregler 40, die Pumpe 42 und die Nachheizung 46. Das Trennmodul 13 weist ferner Anschlüsse für die CO₂-Druckflasche 20 und die Lösungsmittelbehälter 26 und 44 auf.

Die mobile Phase tritt als zweiphasiger Strom (gas-flüssig) in einen Gas-Flüssigkeits-Abscheider 48 ein, wo die flüssige Phase bestehend aus Modifier und gelösten Probenbestandteilen am unteren Teil des Gas-Flüssigkeits-Abscheiders 48 austritt und das gasförmige CO₂ am oberen Teil austritt.

Am unteren Ende des Gas-Flüssigkeits-Abscheiders 48 ist ein Mehrwegeventil 50, hier beispielhaft in Form eines Zwei-Wege-Ventils, angeordnet. Durch das Zwei-Wege-Ventil wird gewählt, ob die Flüssigkeit in den organischen Abfallbehälter 52 oder in eine nachgeordnete Kapillare 54 geleitet wird und von dort gesammelt wird. Das Sammeln erfolgt durch automatisches Platzieren eines Fraktioniergefäßes 56 unter dem Auslass der Kapillare 54 durch computergesteuertes Drehen eines runden Fraktioniergefäßhalters 58. Der Fraktioniergefäßhalter 58 kann je nach Anzahl und Volumen der zu sammelnden Fraktionen gewechselt werden.

Der Gas-Flüssigkeits-Abscheider 48 ist an einem vertikal beweglichen Roboterarm 60 angebracht. Dadurch kann die Kapillare 54 in das Fraktioniergefäß 56 beim Sammeln der Fraktion eintauchen, wodurch eine Verunreinigung der benachbarten Fraktioniergefäße durch Aerosolbildung und Spritzen verhindert wird.

Das Sammlermodul 12 ist so konstruiert, dass das Sortiermodul 14 angeschlossen werden kann. Durch das Vorstehen der Einheit, die den Fraktioniergefäßhalter 58 trägt, kann der Greifer 62 des Sortiermoduls 14 so über den Fraktioniergefäßhalter 58 fahren, dass ein Fraktioniergefäß 56 aufgenommen werden kann bzw. in einen leeren Platz eingestellt werden kann. Dadurch können gefüllte Fraktioniergefäße 56 aus dem Sammlermodul 12 entnommen werden und leere (oder teilgefüllte) aus einem Fraktioniergefäßhalter 64 des Sortiermoduls 14 eingestellt werden. Da der Fraktioniergefäßhalter 64 im Sortiermodul 14 durch den Anwender im laufenden Betrieb ausgetauscht werden kann, ist auf diese Art theoretisch ein Sammeln einer unbegrenzten Anzahl von Fraktionen möglich. Das Sortiermodul 14 ist auf Grundlage eines Greifsystems mit einem beweglichen Greifers 62 konstruiert. Das Sortiermodul kann mit einem Wägesystem ausgestattet werden, das es erlaubt das Gewicht von Fraktionen zu bestimmen, zu speichern und mit anderen Fraktionen zu vergleichen. Das Sortiermodul 14 kann Fraktioniergefäße 56 im Fraktioniergefäßhalter 64 des Sortiermoduls 14 umstellen oder Fraktioniergefäße 56 vom Sortiermodul 14 zum Sammlermodul 12 transportieren und umgekehrt. Der Fraktioniergefäßhalter 64 des Sortiermoduls 14 hat hier eine rechteckige Grundform, ist jedoch nicht auf diese Grundform beschränkt.

Weitere Anwendungsmöglichkeiten, die mit Hilfe des Sortiermoduls 14 realisierbar sind, umfassen zum Beispiel die Weiteranalyse in einem Massenspektrometer, eine nachfolgende chromatographische Trennung oder die automatische Vorbereitung der Fraktioniergefäße zur Trocknung der Fraktionen in einer Vakuumzentrifuge. Der Vorteil des Sortiermoduls 14 besteht dabei darin, dass die Proben durch Vorsortierung leicht durch den Anwender in ein weiteres Gerät zu überführen sind oder die Fraktioniergefäßhalter 64 aus dem Sortiermodul 14 direkt in ein weiteres Gerät eingestellt werden können.

Die Bauform der Module 12, 13 und 14 ist vorzugsweise so gewählt, dass das gesamte SFC-System in einem Standard-Labor-Abzug (Systembreite < 1,5 m) installiert werden kann.

Die Figur 2 gibt das Sammlermodul 12 des SFC-Systems 10 aus Figur 1 in vergrößerter Darstellung wieder. Wie ersichtlich, sind Gas-Flüssigkeits-Abscheider 48, Mehrwegeventil 50 und Kapillare 54 fest aneinander gekoppelt und können mit Hilfe des Roboterarms 60 eine vertikale Bewegung durchführen (Alternative (i)). Dadurch kann die Kapillare 54 in das Fraktioniergefäß 56 beim Sammeln der Fraktion eintauchen und anschließend wieder herausfahren. Schematisch dargestellt ist auch eine Aussparung 66 für den Anschluss eines Sortiermoduls 14.

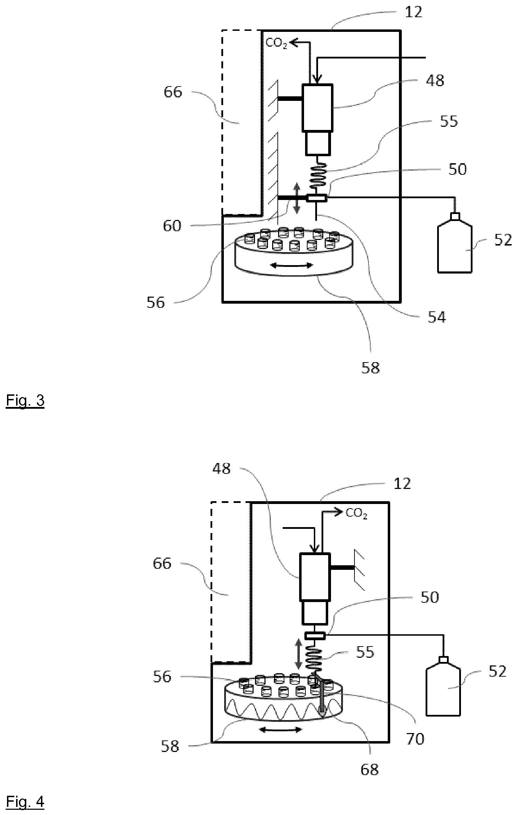

Figur 3 zeigt ein Sammlermodul 12 gemäß einer weiteren Ausführungsform, bei der der Gas-Flüssigkeits-Abscheider 48 fest am Sammlermodul 12 montiert ist, das Mehrwegeventil 50 und Kapillare 54 jedoch mit Hilfe des Roboterarms 60 eine vertikale Bewegung ausüben können (Alternative (ii)).

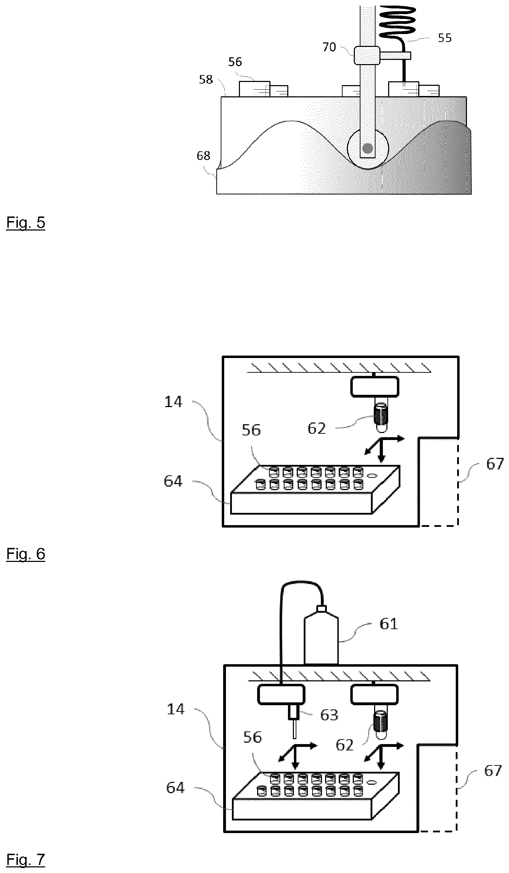

Ferner zeigt Figur 4 ein Sammlermodul 12 in einer weiteren Ausführungsform, bei der der Gas-Flüssigkeits-Abscheider 48 und das Mehrwegeventil 50 fest am Sammlermodul 12 montiert sind, jedoch die Kapillare 54 vertikal bewegt wird (Alternative (iii)). Die vertikale Bewegung einer am Mehrwegeventil 50 angeschlossenen flexiblen Kapillare 55 wird hier durch eine Mechanik erzwungen, bei der eine Drehbewegung des Fraktioniergefäßhalters 58 ausgenutzt wird. Dazu weist der Rand des Fraktioniergefäßhalters 58 ein Wellenprofil 68 auf. Das Wellenprofil 68 und ein Laufrad mit Kapillarhalterung 70 sind so aufeinander abgestimmt, dass die Kapillare 54 in einem Wellental in das darunterliegende Fraktioniergefäß eintaucht und bei Weiterdrehen des Fraktioniergefäßhalters 58 wieder herausgehoben wird (siehe dazu auch die Vergrößerung eines Teilausschnitts der Figur 4 in Figur 5).

Figur 6 zeigt in einer vergrößerten Darstellung das Sortiermodul 14 aus Figur 1. Der Greifer 62 ist hier in drei Raumrichtungen beweglich gelagert. Dazu ist der Greifer an einem Seilzug befestigt, der mittels einer Laufkatze entlang eines Trägers verfahrbar ist. Die Konturen des Sortiermoduls 14 und des benachbarten Sammlermoduls 12 greifen so ineinander, dass der Greifer 62 Probengläser 56 aus dem Fraktioniergefäßhalter 58 des Sammlermoduls entnehmen kann. Vorliegend ist hier eine Aussparung 67 als Verbindungstelle zum Sammlermodul 12 gestrichelt angedeutet.

Figur 7 zeigt die Ausführung des Sortiermoduls 14 wie in Figur 6 dargestellt, jedoch mit einem zusätzlichen Roboterarm, an dem eine Pipettiervorrichtung 63 angebracht ist, mit deren Hilfe Flüssigkeiten zwischen den Fraktioniergefäßen transportiert beziehungsweise aus einem Lösungsmittelbehälter 61 zugegeben werden können.

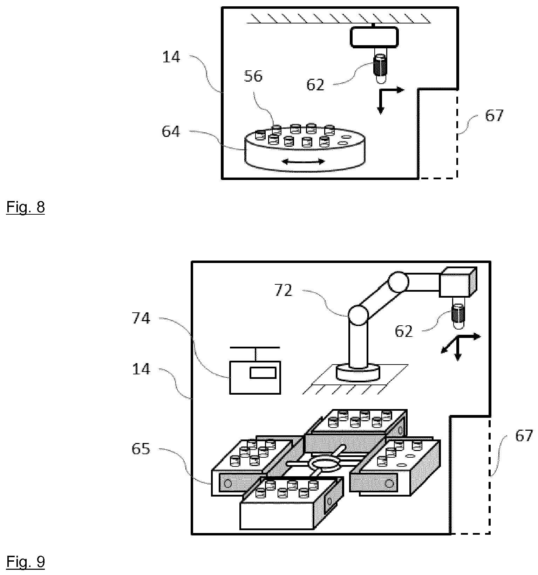

Das Sortiermodul 14 gemäß Figur 8 unterscheidet sich von dem in Figur 6 dadurch, dass der Fraktioniergefäßhalter 64 rund ist. Durch eine einfache Drehbewegung der Fraktioniergefäßhalter lassen sich die Fraktioniergefäße in eine vorbestimmte Position bewegen. Wenn das Sammlermodul 12 und Sortiermodul 14 jeweils einen runden Fraktioniergefäßhalter 58, 64 aufweisen, können zwei definierte Positionen auf einfache Weise vorgegeben werden zwischen denen der Greifer 62 bewegt wird. Die Bewegung des Greifers ist dementsprechend einfach realisierbar, weil eine Bewegung nur in zwei Raumrichtungen (x, z) erfolgen muss.

Für komplexere Anforderungen kann das Sortiermodul 14, wie in Figur 9 dargestellt, einen Gelenkarm 72 umfassen, der den Greifer 62 trägt. Ein integriertes Wägesystem 74 ermöglicht das Wiegen der Fraktioniergefäße. Optional ist es möglich einen zu Geräten zur Weiterbehandlung von Fraktionen kompatiblen Fraktioniergefäßhalter 65 zu verwenden.

### Bezugszeichenliste

10 SFC-System
12 Sammlermodul
13 Trennmodul
14 Sortiermodul
20 CO₂-Druckflasche
22 Wärmetauscher
24 CO₂-Pumpe
26 Lösungsmittelbehälter
28 Modifier-Pumpe
30 Vorheizung
32 Autosampler
34 Säule
36 Säulenofen
38 Detektor
40 Rückdruckregler
42 Pumpe
44 Lösungsmittelbehälter
46 Nachheizung
48 Gas-Flüssigkeit-Abscheider
50 Mehrwegeventil
52 Abfallgefäß
54 Kapillare
55 Flexible Kapillare
56 Fraktioniergefäß
58 Fraktioniergefäßhalter des Sammlermoduls 12
60 Roboterarm
61 Lösungsmittelbehälter
62 Greifer
63 Pipettiervorrichtung
64 Fraktioniergefäßhalter des Sortiermoduls 14
65 Fraktioniergefäßhalter kompatibel zu Geräten zur Weiterbehandlung von Fraktionen
66, 67 Aussparung für Anschluss des Sortiermoduls 14 / des Sammlermoduls 12
68 Wellenprofil am Fraktioniergefäßhalter
70 Laufrad mit Kapillarhalterung
72 Gelenkarm
74 Wägesystem

## Patentansprüche

1. Präparatives SFC-System, umfassend:
- ein Sammlermodul (12) zum Auffangen von Fraktionen, die bei einer Fraktionierung eines Stoffgemisches anfallen, wobei das Sammlermodul (12) einen Fraktioniergefäßhalter (58) für eine Vielzahl von Fraktioniergefäßen (56) umfasst, die elektrisch oder pneumatisch nacheinander unter eine Austrittsöffnung eines Gas-Flüssigkeits-Abscheiders (48) positionierbar sind; und
- ein Sortiermodul (14), das sich dem Sammlermodul (12) auf einer Seite anschließt und ein Greifsystem mit einem Greifer (62) beinhaltet, der ausgelegt ist Fraktioniergefäße (56) aus dem Fraktioniergefäßhalter (58) des Sammlermoduls (12) zu entnehmen oder Fraktioniergefäße (56) in den Fraktioniergefäßhalter (58) des Sammlermoduls (12) einzusetzen.

2. Präparatives SFC-System nach Anspruch 1, bei dem das Sammlermodul (12) und das Sortiermodul (14) jeweils einen runden Fraktioniergefäßhalter (58, 64) aufweisen, in dessen Umfang Aufnahmen für Fraktioniergefäße (56) vorgesehen sind.

3. Präparatives SFC-System nach Anspruch 1, bei dem das Greifsystem des Sortiermoduls (14) ausgelegt ist, die Positionen der Fraktioniergefäße (56) innerhalb des Sortiermoduls (14) zu wechseln.

4. Präparatives SFC-System nach Anspruch 1, bei dem das Sortiermodul (14) ausgelegt ist, Flüssigkeiten aus einem oder mehreren Lösemittelbehältern (61) in die Fraktioniergefäße (56) oder Flüssigkeiten zwischen den Fraktioniergefäßen (56) zu pipettieren.

5. Präparatives SFC-System nach Anspruch 1, bei dem das Sortiermodul (14) mit einem Wägesystem (74) ausgestattet ist, mit dem die Gewichte der Fraktioniergefäße (56) gemessen und untereinander verglichen werden können.
